# EUROPÄISCHE PATENTSCHRIFT

(11) **EP 3 542 378 B1**
(45) Veröffentlichungstag und Bekanntmachung des Hinweises auf die Patenterteilung: **26.01.2022**
(21) Anmeldenummer: 16797927.7
(22) Anmeldetag: 17.11.2016
(51) Int. Cl.: H01F 27/38, H01F 27/42, H01F 38/14, H01F 19/08

(54) **TRENNTRANSFORMATOR MIT GERINGEN UNERWÜNSCHTEN RESONANZEN, ENERGIEÜBERTRAGER MIT TRENNTRANSFORMATOR UND ENERGIEÜBERTRAGER ZUR DRAHTLOSEN ENERGIEÜBERTRAGUNG MIT TRENNTRANSFORMATOR**
ISOLATION TRANSFORMER WITH LOW UNWANTED RESONANCES, ENERGY TRANSFER DEVICE HAVING AN ISOLATION TRANSFORMER AND ENERGY TRANSFER DEVICE FOR WIRELESS TRANSFER OF ENERGY HAVING AN ISOLATION TRANSFORMER
TRANSFORMATEUR D'ISOLATION PRÉSENTANT DE FAIBLES RÉSONANCES PARASITES, TRANSMETTEUR D'ÉNERGIE ÉQUIPÉ D'UN TRANSFORMATEUR D'ISOLATION ET TRANSMETTEUR D'ÉNERGIE POUR LA TRANSMISSION SANS FIL D'ÉNERGIE ÉQUIPÉ D'UN TRANSFORMATEUR D'ISOLATION

(43) Veröffentlichungstag der Anmeldung: 25.09.2019
(73) Patentinhaber: TDK Electronics AG, 81671 München (DE)
(72) Erfinder: BECK, Fabian, 4522 Rüttenen (CH)
(74) Vertreter: Epping - Hermann - Fischer
(86) Internationale Anmeldenummer: PCT/EP2016/078069
(87) Internationale Veröffentlichungsnummer: WO 2018/091098

(56) Entgegenhaltungen:
- WO-A2-2011/124761
- DE-T5-112013 005 724
- GB-A- 2 440 571
- JP-A- H1 066 203
- JP-U- S6 316 418
- US-A- 4 763 235
- US-A1- 2006 056 205
- US-A1- 2012 133 469

## Beschreibung

Die Erfindung betrifft Trenntransformatoren, in denen unerwünschte Resonanzen unterdrückt sind. Ferner betrifft die Erfindung Energieübertrager, z. B. für drahtlose Energieübertragung, mit solchen Trenntransformatoren.

Bei Systemen zur drahtlosen Energieübertragung durch Energieübertrager wird elektrische Energie, z. B. durch eine magnetische Kopplung, über eine Sendespule emittiert und von einer Empfangsspule aufgenommen. Damit können mobile Kommunikationsgeräte und Kraftfahrzeuge kontaktlos geladen werden. Solche Energieübertrager können einen Trenntransformator umfassen, der eine galvanische Isolation zwischen einer Energiequelle und der Sendespule zur Verfügung stellt.

Aus Druckschriften JP S63-16418 U, JP H10-66203 A und WO 2011/124761 A2 sind Transformatoren mit einer Primärspule, einer Sekundärspule und zumindest einer weiteren Wicklung auf der Primär- oder Sekundärseite bekannt.

Problematisch bei Systemen zur drahtlosen Energieübertragung, insbesondere bei hohen elektrischen Leistungen, ist ein Energieverlust durch eine geringe magnetische Kopplung zwischen den beiden oben genannten Spulen. Solche Übertragungssysteme arbeiten mit einem Wechselstromsignal mit einer Frequenz im Kilohertzbereich. Parasitäre induktive und kapazitive Elemente innerhalb des Pfads, den die Energie nimmt, führen zu Leckströmen. Insbesondere Resonanzen von Anpasselementen können durch solche parasitären Reaktanzelemente gebildet werden und führen zu einer Verringerung der Energieeffizienz. Unerwünschte Resonanzen können dabei bei der Arbeitsfrequenz des Energieübertragungssystems oder bei harmonischen höherer Ord nung auftreten. Ebenfalls nachteilhaft ist die elektromagnetische Verunreinigung der Umgebung des Energieübertragungssystems, denn elektrische Leistung, die emittiert aber nicht von der Empfangsspule absorbiert wird, koppelt im Allgemeinen in unerwünschter Weise an die Umgebung.

Störende Moden, die zu Energieverlustkanälen führen können, können Gleichtaktstörungen und Gegentaktstörungen umfassen. Eine Methode zur Verringerung von Gleichtaktstörungen besteht darin, im Leistungsweg eine Gleichtaktentstördrossel zur Verfügung zu stellen. Durch eine Gleichtaktentstördrossel entsteht prinzipiell ein zusätzlicher Energieverlustkanal. Im Übrigen wirken Gleichtaktentstördrosseln nur bedingt gegen störende Gegentaktresonanzen.

Es ist deshalb eine Aufgabe, ein System zur Energieübertragung, insbesondere zur drahtlosen Energieübertragung anzugeben. Ein solcher Energieübertrager hat dabei insbesondere einen Trenntransformator gemäß dem unabhängigen Anspruch 1.

Abhängige Ansprüche geben vorteilhafte Ausgestaltungen an.

Der Trenntransformator hat eine Eingangswicklung, eine Ausgangswicklung und eine dritte Wicklung. Ferner umfasst der Trenntransformator ein kapazitives Element und ein resistives Element. Das kapazitive Element und das resistive Element sowie die dritte Wicklung sind in Reihe geschaltet. Die Eingangswicklung, die Ausgangswicklung und die dritte Wicklung sind magnetisch gekoppelt.

Damit wird ein Trenntransformator mit verringerten unerwünschten Resonanzen angegeben. Durch die Verringerung unerwünschter Resonanzen wird der Kopplungsfaktor eines zugehörigen Energieübertragungssystems erhöht. Die Auswirkung parasitärer kapazitiver und/oder induktiver Elemente ist verringert. Insbesondere ist das Ausbilden von Resonanzen bei der Betriebsfrequenz oder bei höheren Harmonischen der Betriebsfrequenz verringert. Insgesamt wird dadurch ein höherer Wirkungsgrad des Energieübertragers erreicht und Störungen der Umgebung des Übertragungssystems verringert.

Erfindungsgemäß weist der Trenntransformator einen Transformatorkern auf.

Die Eingangswicklung, die Ausgangswicklung und die dritte Wicklung sind auf den Transformatorkern gewickelt.

Der Transformatorkern kann ein gemeiner Ferrit- oder Eisenkern sein. Der Transformatorkern kann ein ferromagnetisches Joch aufweisen, damit der Transformatorkern bezüglich des magnetischen Flusses einen geschlossenen Pfad darstellt. Der Transformatorkern kann alternativ auch stabförmig ausgebildet sein. Die Eingangswicklung, die Ausgangswicklung und die dritte Wicklung können nebeneinander auf den Transformatorkern gewickelt sein. Insbesondere die Eingangswicklung und die Ausgangswicklung können getrennt voneinander am Transformatorkern angeordnet sein, um eine galvanische Trennung der Wicklungen sicherzustellen.

Erfindungsgemäß sind die Eingangswicklung und die dritte Wicklung sehr nah beieinander angeordnet, indem die Eingangswicklung und die dritte Wicklung bifilar auf dem Transformatorkern gewickelt sind.

Es ist möglich, dass die Eingangswicklung und/oder die dritte Wicklung die zweite Wicklung bedecken.

Durch eine Anordnung, bei der die dritte Wicklung näher an der Eingangswicklung als an der Ausgangswicklung angeordnet ist, können die Kopplungen der dritten Wicklung an die Eingangswicklung beziehungsweise an die Ausgangswicklung unterschiedlich stark eingestellt sein. So kann die Kopplung der dritten Wicklung an die Eingangswicklung stärker als die Kopplung an die Ausgangswicklung ausgeprägt sein.

Erfindungsgemäß bilden das kapazitive Element, das resistive Element und die dritte Wicklung einen Dämpfkreis für unerwünschte Resonanzen.

Die dritte Wicklung hat eine Induktivität, das kapazitive Element hat eine Kapazität und das resistive Element hat einen elektrischen Widerstand. Die Induktivität der dritten Wicklung und die Kapazität des kapazitiven Elements können einen Resonanzkreis bilden, dessen Resonanzfrequenz z. B. auf die Arbeitsfrequenz des Trenntransformators oder auf eine höhere Harmonische derselben abgestimmt ist. Durch den elektrischen Widerstand des resistiven Elements kann dann Parasitäre Leistung gezielt dissipiert werden. Ohne den Dämpfkreis würden über unerwünschte Resonanzen aus dem Energieübertragungssystem unwiederbringlich emittiert.

Es ist möglich, dass das resistive Element einen elektrischen Widerstand R aufweist, der größer oder gleich 1 Ohm und kleiner oder gleich 20 Ohm ist. Das kapazitive Element kann eine Kapazität C aufweisen, die ≥ 0,5 nF und ≤ 10 nF ist. Die dritte Wicklung kann eine Windungszahl N haben, die ≥ 5 und ≤ 40 ist.

Allgemein gilt dabei, dass der elektrische Widerstand R, die Kapazität C und die Windungszahl N der Schaltungselemente des Dämpfkreises auf kritische Frequenzen, z. B. Resonanzfrequenzen, der primären Windungen des Trenntransformators abgestimmt sein können.

Der Trenntransformator kann dabei eine Arbeitsfrequenz zwischen 50 und 100 kHz haben. Eine bevorzugte Arbeitsfrequenz ist beispielsweise 85 kHz. Dem entsprechend können die Impedanzwerte der Schaltungselemente des Dämpfkreises auf 85 kHz oder auf Vielfache von 85 kHz, z. B. dem Zweifachen, dem Dreifachen oder dem Vierfachen von 85 kHz abgestimmt sein.

Es ist möglich, dass die Eingangswicklung und die Ausgangswicklung gleich viele Windungen haben.

Ein solcher Trenntransformator bewirkt im Wesentlichen eine galvanische Trennung zwischen seiner Eingangs- und seiner Ausgangsseite, ohne Spannungs- beziehungsweise Stromwerte im Wesentlichen zu verändern. Allerdings ist es auch möglich, dass das Windungsverhältnis von 1 abweicht. Dann kann der Trenntransformator zusätzlich zur galvanischen Trennung Spannungen und - invers dazu - Ströme transformieren. Das Windungsverhältnis kann dabei zwischen 0,3 und 3 liegen.

Es ist möglich, dass die Eingangswicklung eine Induktivität Lᵣ aufweist, die größer oder gleich 1 mH und kleiner oder gleich 10 mH ist.

Die Trafo-Induktivität L_{I} kann z. B. 3,76 mH betragen.

Es ist möglich, dass die Eingangswicklung N₁ Windungen und die Ausgangswicklung N₂ Windungen haben. Die Zahl der Windungen N₁ und N₂ kann dabei jeweils 29 betragen. Der elektrische Widerstand R des resistiven Elements kann 10 Ohm betragen. Die Kapazität C des kapazitiven Elements kann 2,2 nF betragen. Die Windungszahl N₃ der dritten Wicklung kann 22 betragen.

Es ist möglich, dass das Windungsverhältnis N₃:N₁ ≥ 0,5 und ≤ 1,0 ist. Insbesondere kann das Windungsverhältnis N₃:N₁ im Wesentlichen 0,76 (29:22, gerundet) betragen. Dieses oder ein ähnliches Windungsverhältnis im Bereich zwischen 0,5 und 1,0 kann auch durch andere als oben angegebene Windungszahlen der Eingangs- beziehungsweise der Ausgangswicklungen betragen.

Ein Energieübertrager, bei dem die Umgebung weniger mit Emissionen belastet wird, kann einen wie oben angegebenen Trenntransformator umfassen. Zusätzlich kann ein solcher Energieübertrager einen Wechselrichter umfassen, der in Reihe mit dem Trenntransformator geschaltet ist.

Zusätzlich dazu kann der Energieübertrager eine Gleichtaktdrossel umfassen, die in Reihe mit dem Trenntransformator geschaltet ist.

Umfasst der Energieübertrager sowohl einen Wechselrichter als auch eine Gleichtaktdrossel, so kann die Gleichtaktdrossel zwischen dem Wechselrichter und dem Trenntransformator verschaltet sein.

Der Trenntransformator kann auch in einem Energieübertrager zur drahtlosen Energieübertragung Verwendung finden. Ein entsprechender Energieübertrager umfasst neben einem Trenntransformator und einem in Serie dazu geschalteten Wechselrichter und gegebenenfalls einer Gleichtaktdrossel auch eine Sendewicklung, wobei der Trenntransformator zwischen der Sendewicklung und dem Wechselrichter verschaltet ist. Ein System zur Energieübertragung wird komplettiert, indem es eine zusätzliche Empfangswicklung aufweist. Die Sendewicklung kann dabei zwischen der Empfangswicklung und dem Trenntransformator verschaltet sein. Die Energieübertragung zwischen Sendewicklung und Empfangswicklung geschieht dabei ohne physischen Kontakt zwischen diesen Wicklungen. Vorzugsweise sind die Sendewicklung und die Empfangswicklung so zueinander ausgerichtet, dass die Kopplung maximal ist.

Der Energieübertrager zur drahtlosen Energieübertragung kann dann einen zusätzlichen Gleichrichter aufweisen, der der Empfangswicklung nachgeschaltet ist. Der Gleichrichter wandelt das elektrische Signal, z. B. mit der Frequenz 85 kHz, in ein Gleichstromsignal um, z. B. um den Energiespeicher, z. B. einen Akku, eines mobilen Kommunikationsgeräts, eines Automobils oder eines weiteren elektrisch betriebenen Geräts zu füllen.

Wesentliche Prinzipien des Trenntransformators und/oder des Energieübertragers sind anhand von schematischen Figuren gezeigt.

Dabei zeigen:
- Figur 1: ein Ersatzschaltbild des Trenntransformators mit Dämpfungskreis,
- Figur 2: das Ersatzschaltbild eines Trenntransformators, der an eine Gleichtaktdrossel gekoppelt ist,
- Figur 3: die Verschaltung des Trenntransformators mit einem Wechselrichter,
- Figur 4: die Verschaltung eines Trenntransformators mit einer Gleichtaktdrossel und einem Wechselrichter,
- Figur 5: das Ersatzschaltbild eines drahtlosen Energieübertragers mit einer Sendewicklung und einer Empfangswicklung,
- Figur 6: die zusätzliche Verwendung eines Gleichrichters,
- Figur 7: die Verwendung des Gleichrichters zum Laden einer Energiequelle,
- Figur 8: den prinzipiellen Aufbau eines Testsystems,
- Figur 9: die Einfügedämpfung (Matrixelement S₁₂) eines Trenntransformators, aufgeteilt in Gleichtaktsignal und Gegentaktsignal,
- Figur 10: weitere gemessene Spannungswerte und zugehörige erlaubten Grenzwerte,

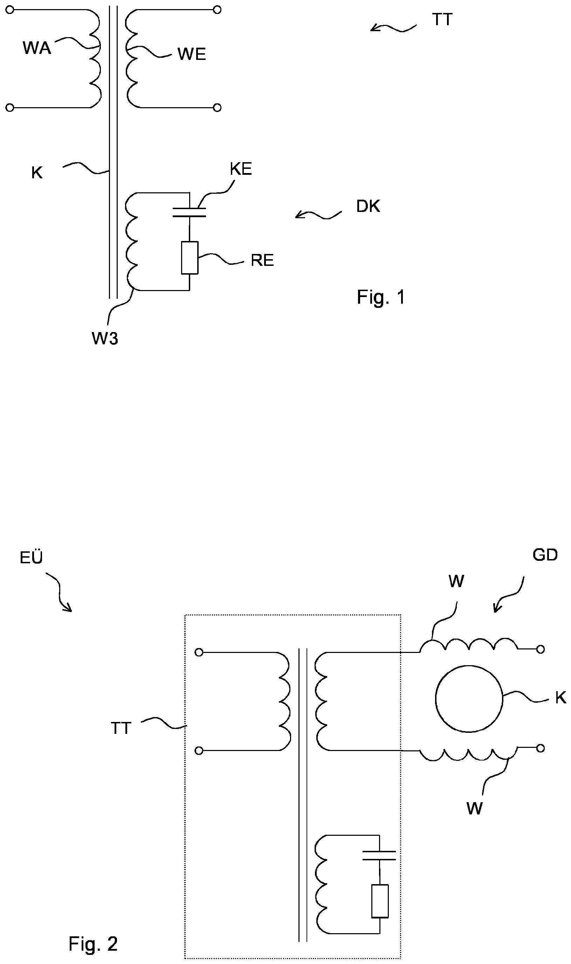

Figur 1 zeigt ein Ersatzschaltbild eines verbesserten Trenntransformators TT, der eine Eingangswicklung WE und eine Ausgangswicklung WA aufweist. Die Eingangswicklung WE und die Ausgangswicklung WA sind magnetisch über einen Transformatorkern K gekoppelt. Zusätzlich hat der Trenntransformator TT einen Dämpfkreis DK, der eine dritte Windung W3, ein kapazitives Element KE und ein resistives Element RE aufweist. Über den Transformatorkern K ist auch die dritte Windung W3 magnetisch an die Eingangswicklung WE und an die Ausgangswicklung WA gekoppelt. Die Darstellung des Transformatorkerns K ist schematisch. Der Transformatorkern K kann stabförmig ausgebildet sein oder einen magnetisch geschlossenen Kreis, z. B. einen U-förmigen Kern mit Joch, bilden.

Der Dämpfkreis DK des Transformatorkerns TT dämpft kritische Frequenzen, so dass kritische Resonanzen, die zur unerwünschten Resonanz führen würden, gar nicht erst entstehen können.

Figur 2 zeigt die optionale Verschaltung des Trenntransformators TT mit einer Gleichtaktdrossel GD. Die Gleichtaktdrossel GD umfasst einen Drosselkern K und zwei Windungen W. Die Dimensionen des Kerns K und der Windungen W sind so gewählt, dass Gleichtaktstörungen maximal unterdrückt werden.

Damit wird ein Energieübertrager EÜ erhalten, in dem Gleichtaktstörungen und kritische Resonanzen, z. B. durch Gegentaktsignale, stark verringert sind.

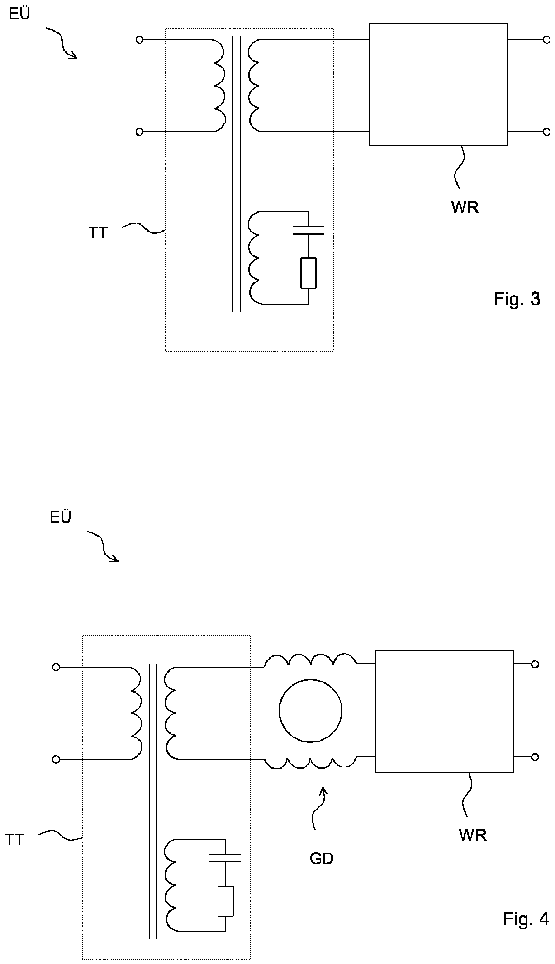

Figur 3 zeigt die Verschaltung des Energieübertragers EÜ mit einem Wechselrichter WR. Der Wechselrichter empfängt elektrische Energie in Form eines Gleichstroms und gibt ein Wechselstromsignal an den Trenntransformator TT. Der Wechselrichter WE kann dabei eine Schalteranordnung NH-Konfiguration (H-Brücke) aufweisen. Die Schalter können Halbleiterschalter sein. Das aufgegebene Wechselstromsignal kann dann beispielsweise eine Rechteckschwingung mit steilen Spannungsflanken sein. Die Arbeitsfrequenz des dem Wechselrichter nachgeschalteten Trenntransformators kann beispielsweise 85 kHz betragen.

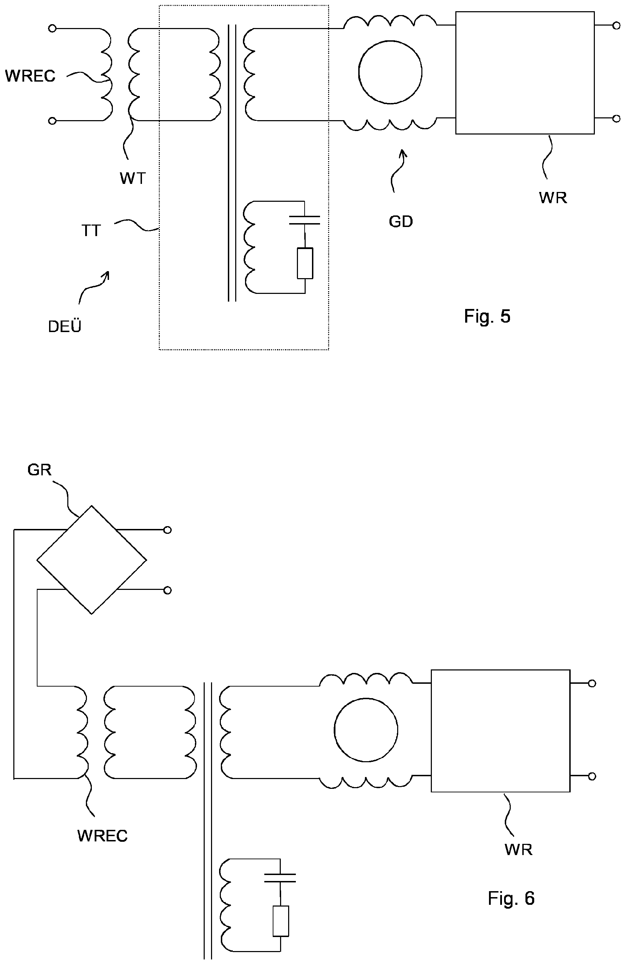

Figur 4 zeigt eine Form des Energieübertragers, bei der die Gleichtaktdrossel GD zwischen dem Trenntransformator TT und dem Wechselrichter WR verschaltet ist. Figur 5 zeigt ein System zur drahtlosen Energieübertragung. Der drahtlose Energieübertrager DEÜ hat zusätzlich zum Wechselrichter WE, zur Gleichtaktdrossel GD und zum Trenntransformator TT eine Sendewicklung WT. Über die Sendewicklung WT kann ein magnetisches oder elektromagnetisches Leistungssignal abgegeben werden. Über eine Empfangswicklung WREC kann diese magnetische oder elektromagnetische Leistung empfangen und an eine Schaltungsumgebung abgegeben werden. Der räumliche Abstand zwischen der Sendespule WT und der Empfangsspule WR kann zwischen 3 und 20 cm liegen.

Figur 6 zeigt einen drahtlosen Energieübertrager, bei dem ein Gleichrichter GR an die Empfangswicklung WREC angeschlossen ist. Das Wechselsignal im Kilohertzbereich wird durch den Gleichrichter GR wieder in ein Gleichstromsignal zur Verwendung in einer weiteren Schaltung gewandelt.

Der Gleichrichter kann dabei ein Kreuzgleichrichter mit vier Dioden und gegebenenfalls Kondensatoren zur Glättung sein.

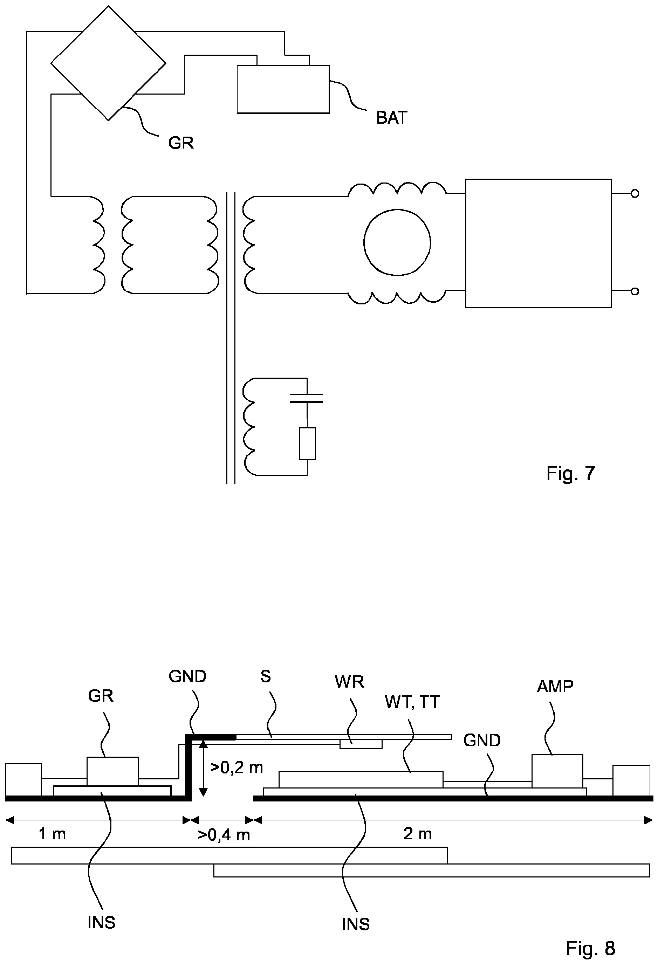

Figur 7 zeigt die Verwendung des drahtlosen Energieübertragers zur Einkopplung der elektrischen Leistung in einen elektrischen Energiespeicher, z. B. den Akkumulator eines Automobils oder eines mobilen Kommunikationssystems.

Figur 8 zeigt die räumliche Anordnung der Komponenten eines Test-Setups, bei dem die Sendewicklung WT und die Empfangswicklung WREC einander gegenüberliegend angeordnet, aber räumlich voneinander getrennt sind. Der Trenntransformator TT ist im Gehäuse der Sendewicklung WT angeordnet und wird durch einen Verstärker AMP gespeist. Unterhalb der Sendewicklung WT ist ein elektrischer Isolator, der eine Dicke von 10 cm aufweisen kann, angeordnet. Unter dem Isolator INS ist ein Kupferblech auf Massepotenzial GND angeordnet. Die Empfangswicklung WREC ist oberhalb der Sendewicklung WT angeordnet. Darüber ist eine elektromagnetische Abschirmung S aus Aluminium mit einer Länge von 1 m und einer Breite von 1 m angeordnet. Die Abschirmung S ist mit einem Kupferblech auf Massepotenzial GND verbunden. Die Empfangswicklung WREC ist mit einem Gleichrichter GR verschaltet, wobei zwischen dem Gleichrichter GR und dem Kupferblech eine 5 cm dicke Isolationsschicht INS angeordnet ist. Der vertikale Versatz zwischen der Abschirmung S und dem unteren Abschnitt des damit verbundenen Kupferblechs auf Massepotenzial GND ist größer als 20 cm. Der horizontale Abschnitt zwischen dem Kupferblech unter der Sendewicklung WT und dem Abschnitt des Kupferblechs unter dem Gleichrichter GR auf gleicher Höhe beträgt mehr als 0,4 m.

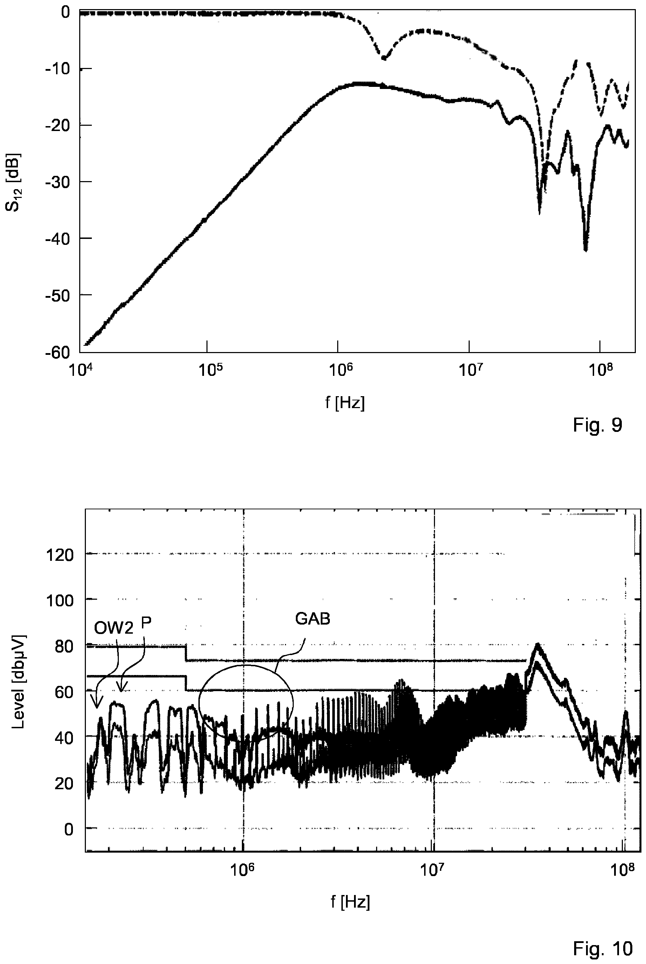

Figur 9 zeigt die Einfügedämpfung des Trenntransformators frequenzabhängig für das Gleichtaktsignal (durchgezogene Linie, unten) und für das Gegentaktsignal (gestrichelte Linie, oben). In einem Frequenzbereich um 85 kHz ist der Trenntransformator praktisch durchlässig für Gegentaktsignale, während Gleichtaktsignale stark gedämpft werden.

Figur 10 zeigt ein typisches Spannungsspektrum mit Peak P. Die obere Kurve zeigt die von einem Spitzenwert-Detektor gemessenen Spitzenwerte. Die untere Kurve zeigt die von einem Mittelwert-Detektor gemessenen Mittelwerte. Gemessen wurde dabei am Eingang des Wechselrichters. Gut zu erkennen ist die Resonanzunterdrückung, speziell bei 1 MHz. Zudem wird die zweite Oberwelle OW2 von 85 KHz stark unterdrückt. Der Frequenzbereich GAB von etwa 10^{5,7} Hz bis 10^{6,3} Hz eignet sich gut als Arbeitsbereich.

Der Trenntransformator und der Energieübertrager sind nicht auf die gezeigten Formen beschränkt. Energieübertrager und Trenntransformatoren mit zusätzlichen Schaltungselementen gehören ebenso zum Umfang der Erfindung, welche lediglich durch die Ansprüche beschränkt wird.

### Bezugszeichenliste

- AMP: Verstärker
- BAT: elektrischer Energiespeicher
- DEÜ: drahtloser Energieübertrager
- DK: Dämpfkreis
- EÜ: Energieübertrager
- GAB: guter Arbeitsbereich
- GD: Gleichtaktdrosssel
- GND: Massepotenzial
- GR: Gleichrichter
- INS: elektrischer Isolator
- K: Transformatorkern bzw. Kern der Gleichtaktdrossel
- KE: kapazitives Element
- OW2: zweite Oberwelle
- P: Peak
- RE: resistives Element
- S: Abschirmung
- S₁₂: Matrixelement, Einfügedämpfung
- TT: Trenntransformator
- W: Wicklung
- W3: dritte Wicklung
- WA: Ausgangswicklung
- WE: Eingangswicklung
- WR: Wechselrichter
- WREC: Empfangswicklung
- WT: Sendewicklung

## Patentansprüche

1. Trenntransformator (TT) mit geringen unerwünschten Resonanzen, umfassend
- eine Eingangswicklung (WE), eine Ausgangswicklung (WA) und eine dritte Wicklung (W3),
- einen Transformatorkern (K)
- ein kapazitives Element (KE) und
- ein resistives Element (RE),
wobei
- das kapazitive Element (KE), das resistive Element (RE) und die dritte Wicklung (W3) in Reihe geschaltet sind,
- die Eingangswicklung (WE), die Ausgangswicklung (WA) und die dritte Wicklung (W3) magnetisch gekoppelt sind,
- das kapazitive Element (KE), das resistive Element (RE) und die dritte Wicklung (W3) einen Dämpfkreis (DK) für unerwünschte Resonanzen bilden,
- die Eingangswicklung (WE) auf den Transformatorkern (K) gewickelt ist,
- die Ausgangswicklung (WA) auf den Transformatorkern (K) gewickelt ist,
- die dritte Wicklung (W3) auf den Transformatorkern (K) gewickelt ist,
**dadurch gekennzeichnet dass**
die Eingangswicklung und die dritte Wicklung bifilar auf dem Transformatorkern gewickelt sind, um die dritte Wicklung nah an der Eingangswicklung anzuordnen.

2. Trenntransformator nach dem vorherigen Anspruch, wobei die Eingangswicklung (WE) und/oder die dritte Wicklung (W3) die zweite Wicklung (WA) bedecken.

3. Trenntransformator nach einem der vorherigen Ansprüche, wobei
- das resistive Element (RE) einen elektrischen Widerstand R mit 1 Ω ≤ R ≤ 20 Ω hat,
- das kapazitive Element (KE) eine Kapazität C mit 0,5 nF ≤ C ≤ 10 nF hat,
- die dritte Wicklung (W3) eine Windungszahl N mit 5 ≤ N ≤ 40 hat.

4. Trenntransformator nach einem der vorherigen Ansprüche, wobei die Eingangswicklung (WE) und die Ausgangswicklung (WA) gleich viele Windungen haben.

5. Trenntransformator nach einem der vorherigen Ansprüche, wobei die Eingangswicklung (WE) eine Induktivität L_{I} mit 1 mH ≤ L_{I} ≤ 10 mH hat.

6. Trenntransformator nach einem der vorherigen Ansprüche, wobei die Eingangswicklung (WE) eine Induktivität L_{I} = 3,67 mH hat.

7. Trenntransformator nach einem der vorherigen Ansprüche, wobei die Eingangswicklung (WE) und die Ausgangswicklung (WA) N₁ = N₂ = 29 Windungen haben, R = 10 Ω, C = 2,2 nF und N = 23.

8. Trenntransformator nach einem der vorherigen Ansprüche, wobei 0,5 ≤ N₃ / N₁ ≤ 1,0, wobei N₁ die Windungszahl der Eingangswicklung und N₃ die Windungszahl der dritten Wicklung ist.

9. Energieübertrager (EÜ), umfassend
- einen Trenntransformator (TT) nach einem der vorherigen Ansprüche,
- einen Wechselrichter (WR), der in Reihe mit dem Trenntransformator geschaltet ist,
- eine Gleichtaktdrossel (GD), die in Reihe zwischen dem Wechselrichter (WR) und dem Trenntransformator (TT) geschaltet ist.

10. Energieübertrager zur drahtlosen Energieübertragung, umfassend
- einen Energieübertrager (ET) nach dem vorherigen Anspruch,
- einen Gleichrichter (GR), der in Serie mit dem Trenntransformator (TT) geschaltet ist,
- eine Empfangswicklung (WREC), die in Serie zwischen dem Gleichrichter (GR) und dem Trenntransformator (TT) geschaltet ist.
- eine Sendewicklung (WT), die in Serie zwischen der Empfangswicklung (WREC) und dem Trenntransformator (TT) geschaltet ist.

## Claims

1. Isolation transformer (TT) with low unwanted resonances, comprising
- an input winding (WE), an output winding (WA) and a third winding (W3),
- a transformer core (K),
- a capacitive element (KE) and
- a resistive element (RE),
wherein
- the capacitive element (KE), the resistive element (RE) and the third winding (W3) are connected in series,
- the input winding (WE), the output winding (WA) and the third winding (W3) are magnetically coupled,
- the capacitive element (KE), the resistive element (RE) and the third winding (W3) form an attenuation circuit (DK) for unwanted resonances,
- the input winding (WE) is wound onto the transformer core (K),
- the output winding (WA) is wound onto the transformer core (K),
- the third winding (W3) is wound onto the transformer core (K),
**characterized in that**
the input winding and the third winding are wound on the transformer core in a bifilar manner in order to arrange the third winding close to the input winding.

2. Isolation transformer according to the preceding claim, wherein the input winding (WE) and/or the third winding (W3) cover the second winding (WA).

3. Isolation transformer according to either of the preceding claims, wherein
- the resistive element (RE) has an electrical resistance R where 1 Ω ≤ R ≤ 20 Ω,
- the capacitive element (KE) has a capacitance C where 0.5 nF ≤ C ≤ 10 nF,
- the third winding (W3) has a number of turns N where 5 ≤ N ≤ 40.

4. Isolation transformer according to one of the preceding claims, wherein the input winding (WE) and the output winding (WA) have an equal number of turns.

5. Isolation transformer according to one of the preceding claims, wherein the input winding (WE) has an inductance L_{I} where 1 mH ≤ L_{I} ≤ 10 mH.

6. Isolation transformer according to one of the preceding claims, wherein the input winding (WE) has an inductance L_{I} = 3.67 mH.

7. Isolation transformer according to one of the preceding claims, wherein the input winding (WE) and the output winding (WA) have N₁ = N₂ = 29 turns, R = 10 Ω, C = 2.2 nF and N = 23.

8. Isolation transformer according to one of the preceding claims, wherein 0.5 ≤ N₃ / N₁ ≤ 1.0, wherein N₁ is the number of turns of the input winding and N₃ is the number of turns of the third winding.

9. Energy transfer device (EU), comprising
- an isolation transformer (TT) according to one of the preceding claims,
- an inverter (WR) which is connected in series with the isolation transformer,
- a common-mode choke (GD) which is connected in series between the inverter (WR) and the isolation transformer (TT) .

10. Energy transfer device for wireless energy transfer, comprising
- an energy transfer device (ET) according to the preceding claim,
- a rectifier (GR) which is connected in series with the isolation transformer (TT),
- a receiving winding (WREC) which is connected in series between the rectifier (GR) and the isolation transformer (TT),
- a transmitting winding (WT) which is connected in series between the receiving winding (WREC) and the isolation transformer (TT).

## Revendications

1. Transformateur d'isolement (TT) à faibles résonances indésirables, ledit transformateur comprenant
- un enroulement d'entrée (WE), un enroulement de sortie (WA) et un troisième enroulement (W3),
- un noyau de transformateur (K)
- un élément capacitif (KE) et
- un élément résistif (RE),
- l'élément capacitif (KE), l'élément résistif (RE) et le troisième enroulement (W3) étant montés en série,
- l'enroulement d'entrée (WE), l'enroulement de sortie (WA) et le troisième enroulement (W3) étant couplés magnétiquement,
- l'élément capacitif (KE), l'élément résistif (RE) et le troisième enroulement (W3) formant un circuit d'amortissement (DK) des résonances indésirables,
- l'enroulement d'entrée (WE) étant enroulé sur le noyau de transformateur (K),
- l'enroulement de sortie (WA) étant enroulé sur le noyau de transformateur (K),
- le troisième enroulement (W3) étant enroulé sur le noyau de transformateur (K),
**caractérisé en ce que**
l'enroulement d'entrée et le troisième enroulement sont enroulés de manière bifilaire sur le noyau de transformateur afin de disposer le troisième enroulement à proximité de l'enroulement d'entrée.

2. Transformateur d'isolement selon la revendication précédente, l'enroulement d'entrée (WE) et/ou le troisième enroulement (W3) recouvrant le deuxième enroulement (WA).

3. Transformateur d'isolement selon l'une des revendications précédentes,
- l'élément résistif (RE) ayant une résistance électrique R telle que 1 **Ω** ≤ R ≤ 20 **Ω**,
- l'élément capacitif (KE) ayant une capacité C telle que 0,5 nF ≤ C ≤ 10 nF,
- le troisième enroulement (W3) ayant un nombre de spires N tel que 5 ≤ N ≤ 40.

4. Transformateur d'isolement selon l'une des revendications précédentes, l'enroulement d'entrée (WE) et l'enroulement de sortie (WA) ayant le même nombre de spires.

5. Transformateur d'isolement selon l'une des revendications précédentes, l'enroulement d'entrée (WE) ayant une inductance L_{I} telle que 1 mH ≤ L_{I} ≤ 10 mH.

6. Transformateur d'isolement selon l'une des revendications précédentes, l'enroulement d'entrée (WE) ayant une inductance L_{I} = 3,67 mH.

7. Transformateur d'isolement selon l'une des revendications précédentes, l'enroulement d'entrée (WE) et l'enroulement de sortie (WA) ayant N₁ = N₂ = 29 spires, R = 10 **Ω**, C = 2,2 nF et N = 23.

8. Transformateur d'isolement selon l'une des revendications précédentes, 0,5 ≤ N₃/N₁ ≤ 1,0, N₁ étant le nombre de spires de l'enroulement d'entrée et N₃ étant le nombre de spires du troisième enroulement.

9. Transmetteur d'énergie (EÜ), comprenant
- un transformateur d'isolement (TT) selon l'une des revendications précédentes,
- un onduleur (WR) monté en série avec le transformateur d'isolement,
- une bobine de choc de mode commun (GD) montée en série entre l'onduleur (WR) et le transformateur d'isolement (TT).

10. Transmetteur d'énergie destiné à la transmission d'énergie sans fil, ledit transmetteur comprenant
- un transmetteur d'énergie (ET) selon la revendication précédente,
- un redresseur (GR) monté en série avec le transformateur d'isolement (TT),
- un enroulement de réception (WREC) monté en série entre le redresseur (GR) et le transformateur d'isolement (TT).
- un enroulement d'émission (WT) monté en série entre l'enroulement de réception (WREC) et le transformateur d'isolement (TT).
